# EUROPEAN PATENT APPLICATION

(11) **EP 4 814 442 A1**
(43) Date of publication of application: **30.09.2026**
(21) Application number: 26167446.9
(22) Date of filing: 25.03.2026
(51) Int. Cl.: G01C 21/00, B60W 60/00, G06V 10/00

(54) **METHODS, APPARATUSES, CONTROLLERS, VEHICLES, AND PROGRAM PRODUCTS FOR GENERATING MAPS**

(30) Priority: 26.03.2025 CN 202510368337
(71) Applicant: Robert Bosch GmbH, 70442 Stuttgart (DE)
(72) Inventor: LIU, Ziming, Shanghai, 200335 (CN)
(74) Representative: Isarpatent

(57) **Abstract**

Embodiments of the present disclosure relate to a method, an apparatus, a controller, a vehicle, and a program product for generating a map. The method involves determining target view features corresponding to the environment based on a set of images related to the environment surrounding the vehicle. The method further comprises determining initialization features for generating a second map based on map information from a first map of the environment, wherein the accuracy of the first map is lower than that of the second map and/or the first map contains less information than the second map. The method further comprises generating map features for the second map based on the target view features and the initialization features. The method of the examples of the present disclosure uses a first map with low precision or less information for the initialization features of a second map, thereby reducing optimization time when generating the second map, enabling the generation of corresponding map information even when image data is missing, and resulting in a more accurate second map due to the constraints of the map information of the first map.

## Description

### Technical Field

Examples of the present disclosure generally relate to the field of vehicle navigation, and specifically to a method, an apparatus, a controller, a vehicle, and a program product for generating a map.

### Background

Autonomous driving is an advanced vehicle driving technology designed to allow vehicles to drive safely and efficiently with little or no human intervention. It relies on sophisticated sensor systems, powerful algorithms, and high-performance computing platforms working together. Sensors comprise a variety of types, such as lidar, cameras, millimeter-wave radar, and ultrasonic sensors that are capable of sensing the environment surrounding the vehicle. The data is then transmitted to the computing unit of the vehicle to make driving decisions such as acceleration, deceleration, and steering, enabling autonomous driving of the vehicle.

High-definition maps play a critical role in autonomous driving. They can provide the vehicle with ultra-precise road information, including geometric information such as the width, length, curvature, and slope of the roadway. Such information is essential for the precise positioning and route planning of the vehicle. In addition, high-definition maps can also assist the vehicle's perception system and help the vehicle make correct decisions. High-definition maps can also update road information in real time, enabling autonomous vehicles to adjust their routes in a timely manner and avoid potential dangers.

### Summary of the Invention

Examples of the present disclosure provide a method, an apparatus, a controller, a vehicle, and a program product for generating a map.

According to a first aspect of the present disclosure, a method for generating a map is provided. The method involves determining target view features corresponding to the environment based on a set of images related to the environment surrounding the vehicle. The method further comprises determining initialization features for generating a second map based on map information from a first map of the environment, wherein the accuracy of the first map is lower than that of the second map and/or the first map contains less information than the second map. The method further comprises generating map features for the second map based on the target view features and the initialization features.

According to a second aspect of the present disclosure, an apparatus for generating a map is provided. The apparatus comprises a view feature determination module configured to determine target view features corresponding to the environment based on a set of images related to the environment surrounding the vehicle; an initialization feature determination module configured to determine initialization features for generating a second map based on map information from a first map of the environment, wherein the accuracy of the first map is lower than that of the second map and/or the first map contains less information than the second map; and a map feature generation module configured to generate map features for the second map based on the target view features and the initialization features.

According to a third aspect of the present disclosure, a controller is provided. The controller comprises at least one processor, and a memory coupled to the at least one processor and having instructions stored thereon that, when executed by the at least one processor, cause the controller to perform steps of the method of the first aspect of the present disclosure.

According to a fourth aspect of the present disclosure, a vehicle is provided. The vehicle includes the controller according to the third aspect of the present disclosure.

According to a fifth aspect of the present disclosure, a machine program product is provided. The machine program product comprises machine-executable instructions, wherein the machine-executable instructions are executed by a processor to implement the steps of the method in the first aspect of the present disclosure.

According to a sixth aspect of the present disclosure, a computer-readable storage medium is provided. The computer-readable storage medium stores a computer program that, when executed by a processor, implements the steps of the method in the first aspect of the present disclosure.

### Brief Description of the Drawings

FIG. 1 is a schematic diagram of an exemplary environment in which a device and/or method according to some examples of the present disclosure may be implemented;
FIG. 2 is a schematic diagram of an exemplary method for generating a map according to some examples of the present disclosure;
FIG. 3 is a schematic diagram of an example of generating a map according to some examples of the present disclosure;
FIG. 4 is a schematic diagram of an example of a navigation map according to some examples of the present disclosure
FIG. 5 is a schematic diagram of an example of lane prediction for a high-definition map according to some examples of the present disclosure;
FIG. 6 is a schematic diagram of an example of generating lane features according to some examples of the present disclosure;
FIG. 7 is a schematic diagram of an example of generating a positional embedding according to some examples of the present disclosure;
FIG. 8 is a schematic diagram of an example of predicting high-definition images according to some examples of the present disclosure;
FIG. 9 is a schematic diagram of an apparatus for generating a map according to some examples of the present disclosure;
FIG. 10 is a schematic block diagram of an exemplary device suitable for implementing some examples of the present disclosure.

In the various accompanying drawings, the same or corresponding numbers represent the same or corresponding portions.

### Detailed Description of the Embodiments

The examples of the present disclosure will be described in further detail below with reference to the accompanying drawings. Although certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on." The term "one example" or "this example" should be understood as "at least one example." The terms "first," "second," etc. may refer to different objects or the same object. The text below may comprise other specific and implicit meanings.

As previously noted, autonomous driving relies heavily on high-definition maps for navigation, decision-making, and route planning. A high-definition map is an accurate and reliable map. It typically includes roads, lanes, road markings, traffic lights, and obstacles. To obtain a high-definition map, a variety of sensors are needed, such as lidar, radar, cameras, and the Global Positioning System (GPS). However, building the latest high-definition maps in this way requires a great deal of resources, making it too costly for most autonomous driving products. In contrast, acquiring standard-definition (SD) maps requires fewer resources, and they can be updated more frequently.

To reduce costs, related solutions generate online high-definition maps through visual perception. This solution projects images acquired by a plurality of cameras into a shared bird's-eye view (BEV) feature space. This solution is based on a deep learning network using the Transformer model. It utilizes randomly generated initialization features that can be used to generate high-definition maps and fuses them with BEV features to obtain high-definition maps. BEV features are obtained through Transformer-based visual perception. However, the optimization process of this solution is too long. Furthermore, the model obtained by this solution is unreliable for new scenarios that are outside the distribution of the training data. Extreme situations such as occluded areas cannot be handled well.

In order to improve the accuracy of the above models, related solutions assist visual perception by incorporating SD map features. These solutions fuse SD map features with BEV features in the same manner as image features to determine road topology, which at most yields enhanced BEV features. However, it is still necessary to continue using randomly generated initialization features to generate high-definition maps. The above solutions still cannot solve the problems of excessively long optimization time for generating high-definition maps and the inability to handle extreme cases such as occluded areas. Moreover, the queries for lane detection lack physical constraints when generating high-definition maps, resulting in inaccurate results.

To this end, examples of the present disclosure provide a method for generating a map. In the method, the controller may first utilize a set of images related to the environment surrounding the vehicle to generate target view features corresponding to the environment. The controller then further utilizes the map information from a first map of the environment to determine initialization features for generating a second map. The accuracy of the first map is lower than the accuracy of the second map and/or the first map contains less information than the second map. Next, the controller generates map features for the second map by using the obtained target view features and the initialization features. By utilizing the initialization features of navigation maps to generate high-definition maps in the above manner, optimization time can be reduced when generating high-resolution
maps, and corresponding map information can be generated even when image data is missing. Furthermore, due to the constraints of map information from navigation maps, the generated high-definition maps are more accurate, thus improving the user experience.

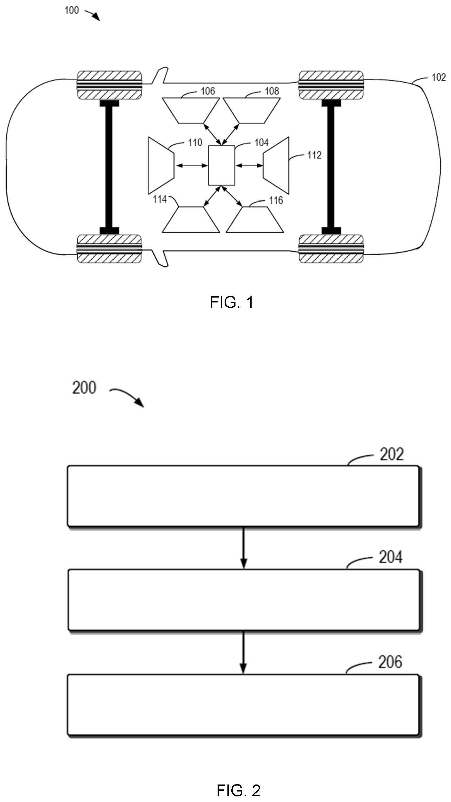

Examples of the present disclosure will be described in further detail below in conjunction with the accompanying drawings, wherein FIG. 1 illustrates an exemplary environment in which the device and/or method according to the examples of the present disclosure may be implemented;

In FIG. 1, the environment 100 shown comprises a vehicle 102. The vehicle 102 comprises a controller 104, which may be used to generate a high-definition map for use by the vehicle 102. In some examples, the controller 104 may be the vehicle's 102 overall controller. In some examples, the controller 104 may be the vehicle's 102 domain controller. Alternatively, the controller 104 is any suitable computing device in communication with the vehicle 102 or a dedicated processor installed in the vehicle.

In FIG. 1, six cameras are also installed on the vehicle 102, including cameras 106, 108, 110, 112, 114, and 116. These six cameras are used to acquire images of the environment in which the vehicle 102 is located. FIG. 1 merely shows an example of a six-camera setup on a vehicle to acquire images of the environment surrounding the vehicle 102, and is not intended to limit the scope of the present disclosure. Those skilled in the art can set up one camera or any suitable number of cameras to acquire images of the environment surrounding the vehicle, such as three or four cameras.

The controller 104 may acquire images captured by the cameras 106, 108, 110, 112, 114, and 116. The controller 104 may then further perform feature extraction on the acquired images, thereby obtaining feature information for these images. For example, the controller 104 may utilize an image feature extraction model to extract image features from the acquired images. The image extraction model may be a machine learning model, such as a neural network model.

The controller 104 then utilizes the acquired feature information of these images to generate target view features of the view of the surrounding environment of the vehicle, such as generating BEV features. When generating target view features, the controller can use any suitable method to process image features to generate BEV features. For example, a cross-attention module can be used to process image features to obtain BEV features. Alternatively, the controller 104 may also employ other network models or mapping relationships to process image features to obtain BEV features.

Next, the controller 104 may further acquire a map containing less information, which may also be referred to as a first map for ease of description. For example, the first map is a navigation map, which may also be referred to as a standard-definition map, and which comprises coarser and simpler map information. The first map may comprise road-related information, such as road type, road reference center line, number of lanes in the road, road markings, etc. For ease of description, the lanes in the first map are also referred to as reference lanes. In addition, the reference center line of a road in the first map can be represented by a polyline. For example, a segment of the reference center line is represented by the coordinates of a vectorized polyline, which comprises a plurality of points. The controller 104 then utilizes the first map to generate initialization features for the second map. For example, the second map is a high-definition map, and the accuracy of the second map is higher than that of the first map and/or the second map contains more map information than the map information contained in the first map.

After obtaining BEV features and initialization features obtained from the first map which includes less information, the controller 104 uses this information to generate map features for the second map. Because the calculation process utilizes information from the first map, the generation of the second map can leverage relevant information from the first map to calculate map features of the second map, such as the coordinates of the lane center line, lane type, and lane markings. This can provide more useful information for the generation of the second map and makes the calculation results of the second map more accurate.

After calculating the map features of the resulting second map, the controller 104 may further obtain lane information in the second map, such as the type of lane, the type of lane line or the center line of the lane, and the position of the lane.

Through this method, the initialization features for the high-definition map are generated using the navigation map, thereby reducing optimization time during high-definition map generation, enabling the generation of corresponding map information even when image data is missing, and resulting in more accurate high-definition maps due to the constraints of navigation map information, thus improving the user experience.

The above, in conjunction with FIG. 1, describes an exemplary environment in which some examples of the present disclosure may be implemented. A schematic diagram of an exemplary method for generating a map according to some examples of the present disclosure is described below in conjunction with FIG. 2. The method shown in FIG. 2 may be executed in the environment shown in FIG. 1 or any suitable environment, for example, by the controller 104 in FIG. 1 or any suitable computing device.

As shown in the method 200 of FIG. 2, at block 202, the controller 104 determines target view features
corresponding to the environment based on a set of images related to the environment surrounding the vehicle. In order to obtain a high-definition map, information about the environment surrounding the vehicle 102 can be added during the high-definition map generation process. In one example, a set of onboard cameras mounted on the vehicle 102 may be utilized to acquire a set of images of the environment surrounding the vehicle, and these images can then be used to generate target view features for a view synthesized from the images.

For example, the controller 104 first acquires a set of images related to the environment via the onboard cameras. After acquiring the set of images, it can extract the features of each image in the set of images. For example, a machine learning model can be used to extract image features from each image. The image features associated with this set of images are then further utilized to generate target view features of a view for describing the surrounding environment. In one example, the view is a BEV, and the target view features are BEV features. In some examples, the controller 104 may also acquire images of the vehicle's surrounding environment in other ways, such as by acquiring environmental images through a camera positioned on the road on which the vehicle is traveling and transmitting them to the vehicle 102. The controller 104 then processes these images to generate BEV features. The above examples are intended only to describe the present disclosure and are not a specific limitation of the present disclosure.

**In** some examples, a cross-attention module can be used to generate BEV features using image features. The cross-attention module can receive initial BEV features and then combine them with image features extracted from a set of images to generate the BEV features. In some examples, a mapping relationship between image features and BEV features can be preset, and the BEV features corresponding to the obtained image features can be acquired through this mapping relationship. The above examples are intended only to describe the present disclosure and are not a specific limitation of the present disclosure.

At block 204, the controller 104 determines initialization features for generating a second map based on map information of a first map for the environment. The accuracy of the first map is lower than that of the second map and/or the first map contains less information than the second map. For example, the road information contained in the first map is coarser and simpler than that contained in the second map, while the road information contained in the second map is more detailed and complex. For example, the first map may be a navigation map; the second map may be a high-definition map.

To avoid the excessively long optimization time for generating high-definition maps from random vectors and the inability to obtain road information due to occluded areas in the images, a map with less information can be used to obtain the initialization features for a map with more information. This not only avoids the aforementioned problems, but also improves the accuracy of high-definition maps by constraining the road information in navigation maps.

To obtain this initialization feature, the controller 104 can first obtain the road information in the map information of the first map. For ease of description, the lanes in the roads in the first map are referred to as reference lanes. For example, road information may include geometric information and semantic information. Geometric information may comprise the road's reference center line, the road's width, etc.

Semantic information of the road may comprise the type of road, the number of lanes in the road, road markings for reference lanes in the road, etc. For example, the type of road may indicate whether the road is a lane or a sidewalk; road markings indicate whether the lanes in the road are for left turns, right turns, or straight-through traffic; the number of lanes indicates how many lanes are arranged on the road.

The controller 104 may then utilize the road information to generate lane features for a reference lane. For example, the geometric information and semantic information of the road are used to generate an enhanced first map, and the enhanced first map is then used to generate lane features. For example, the coordinates of the center line of the reference lane in the enhanced first map, the lane line type, and the lane road markings are determined based on the number of reference lanes and road information including road width and lane width, road type, and road markings in the road.

Upon obtaining the above information, the controller may utilize the lane features to generate initialization features for the second map. When generating lane features, the coordinates of the center line of the reference lane, the lane line type, and the road markings can be applied to a machine learning model to generate lane features. For ease of description, this machine learning model may be referred to as a first machine learning model. Additionally, the first machine learning model may be a neural network model.

**In** some examples, when generating the initialization features for the second map, in addition to using the lane features obtained above, the controller 104 must also further determine the coordinates of the center line of the reference lane, and then use the coordinates of the center line of the reference lane to determine the position quantization representation corresponding to the center line of the reference lane. For example, generating a positional embedding for the center line of the reference lane. The controller then utilizes the lane features and position quantization representation to generate initialization features for the second map. For example, controller 104 generates lane features and position quantization representations with the same dimension, and then adds them together to obtain the initialization feature. At this point, the initialization features comprise not only the lane features, but also the position features of the lane center line. Additionally, if the lane features and the position quantization representation have different dimensions, one of them can be further adjusted in terms of feature dimension. For example, the position quantization representation can be adjusted in terms of feature dimension so that the two have the same dimension.

At block 206, the controller 104 generates map features for the second map based on the target view features and the initialization features. After obtaining the target view features and the initialization features, this information can be further used to generate map features for the second map. The use of information from low-definition maps makes the process of creating high-definition maps faster, and the constraints of low-definition map information make the second map more accurate.

In utilizing the target view features and the initialization features, the controller 104 may apply the target view features and the initialization features to a machine learning model to generate map features. For ease of description, this machine learning model may be referred to as a second machine learning model. For example, the second machine learning model may be a cross attention model. Alternatively, the mapping relationship between view feature initialization features and the map features of a map containing more information may be preset. The controller 104 may then obtain the map features of the second map corresponding to the generated target view features and the initialization features based on the mapping relationship.

**In** some examples, the controller 104 may predict the offset of the target center line of the target lane in the second map from map features of the second map relative to a reference point of the center line of the reference lane in the first map. In addition, the controller 104 may further obtain the center line of the reference lane of the first map and then sample the center line to obtain a reference point. At this point, the controller 104 may further determine the position of the sampled reference point. Accordingly, the controller 104 may utilize the position of the reference point and the offset of the center line of the second map relative to the reference point to obtain the position of the target center line in the second map. For example, the position of the target point in the target center line is determined by adding the position of the reference point to the offset of the reference point. As such, the target center line can be determined using the positions of a plurality of target points calculated from a plurality of reference points. For example, the fitted line connecting a plurality of target points can be used as the target center line.

In some examples, after obtaining the map features of the second map, the map features may also be used to determine the type of lane lines, road markings, or the topological relationship of lanes. For example, different machine learning modules can be used to process the map features to obtain the different information mentioned above.

The method of the examples of the present disclosure utilizes the initialization features of a first map containing less information to generate a second map containing more information, thereby reducing optimization time when generating the second map, enabling the generation of corresponding map information even when image data is missing, and resulting in a more accurate second map due to the constraints of the map information of the first map, thus improving the user experience.

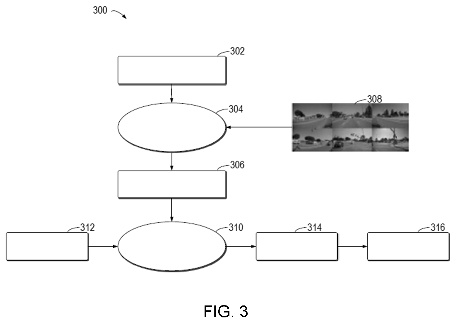

A schematic diagram of an example method for generating a map according to some examples of the present disclosure is described above in conjunction with FIG. 2. An example of generating a map according to some examples of the present disclosure is described below in conjunction with FIG. 3. This example can be implemented by the controller 104 in FIG. 1 or any suitable computing device.

**In** example 300, the controller 104 controls the acquisition of the initial BEV features 302, which may also be referred to as the initial BEV query. Additionally, the initial BEV features 302 are represented by random numbers. The initial BEV features 302 are then input into the cross-attention module 304. In addition to inputting the initial BEV features 302 into the cross-attention module 304, it is also necessary to acquire image features 308 acquired by a plurality of cameras deployed on the vehicle. With respect to the image features 308, the image features 308 can be acquired by first acquiring a plurality of images from a plurality of cameras and then extracting features from the plurality of images. For example, the image can be input into a machine learning model used to generate image features in order to generate image features for the image. For example, the machine learning model may be a convolutional neural network model.

The initial BEV features 302 and the image features 308 are then processed by the cross-attention module 304 to generate BEV features 306. The BEV features 306 incorporate image features of the surrounding environment. Next, the BEV features 306 are input into the cross-attention module 310. In addition, the initialization features 312 for the high-definition map also need to be input into the cross-attention module 310. In related solutions, the initialization features are all randomly generated, which leads to excessively long optimization time when acquiring map features 314, and also fails to accurately handle special cases such as occluded areas in images. In order to avoid the above problems, the initialization features 312 for a high-definition map in the present disclosure are generated from a navigation map. Thus, the map features 314 of the high-definition map generated by the cross-attention module 310 may also be referred to as a query for the high-definition map. After obtaining the map features 314, high-definition map prediction 316 may be performed, such as predicting the type of lane and the position of the center line of the lane. These predictions can be achieved by connecting different prediction networks.

Through this method, the initialization features for the high-definition map are generated using the navigation map, thereby reducing optimization time during high-resolution map generation, enabling the generation of corresponding map information even when image data is missing, and resulting in more accurate high-definition maps due to the constraints of navigation map information, thus improving the user experience.

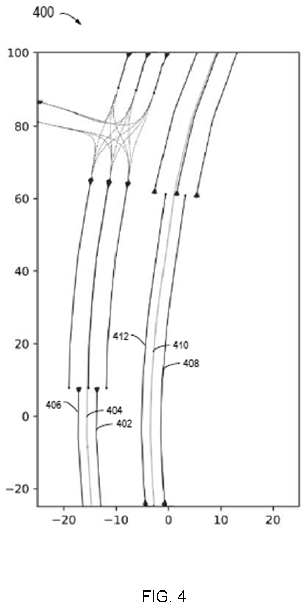

As noted above, a navigation map is required when generating a high-definition map. A schematic diagram of an example of a navigation map according to some examples of the present disclosure is described below in conjunction with FIG. 4. The navigation map in example 400 is an SD map. The SD map can provide a great deal of information. The SD map is an enhanced SD map generated from an initial SD map. For example, the enhanced SD map may provide information including the sampled center line coordinates of the lane, the number of lanes per road, lane type, lane line type, and the topological relationships of lanes. This information may provide physical constraints for lane prediction networks in high-definition maps. Additionally, the enhanced SD map is generated using geometric information and semantic information included in the initial SD map. For example, based on semantic information such as the number of lanes and lane widths included in the initial SD map as well as geometric information such as road positions, parallel lines and Bézier curves are drawn to generate lane information, such as determining the center line of the lane.

In example 400, the roads on both sides are marked, and each side of the road has a three-lane section and a two-lane section. In this example, only the center lines of each side of the road and the center lines of the lanes in the road are shown. Therefore, the lines in the figure represent only the center lines of the roads and the center lines of the lanes, and the lane boundaries are not shown in this example. The two-lane section will now be described. Line 404 represents the center line of one side of the road, which has two lanes. Line 406 and line 402 represent the center lines of the two lanes in this section of road. Similarly, line 410 represents the center line of the road on the other side, and this section of road has two lanes, which have center lines 412 and 408. The figure also shows the topological relationship between the two-lane road and the center line as it transforms into a three-lane road. This example is merely a simple example of an SD map, which can further comprise any other suitable information.

Additionally, if the SD map does not provide the coordinates or positions of the road center line and lane center line, the positions of the road center line and/or lane center line can be calculated based on the road width, lane line positions, and other information provided in the SD map.

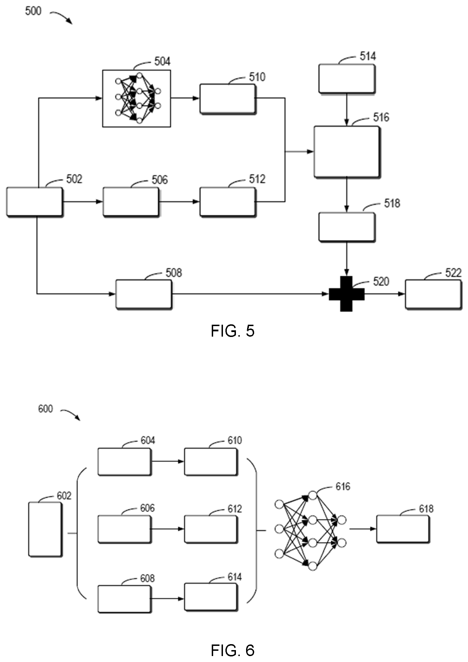

A schematic diagram of an example of a navigation map according to some examples of the present disclosure was described above in conjunction with FIG. 4. A schematic diagram of an example of lane prediction for a high-definition map according to some examples of the present disclosure is described below in conjunction with FIG. 5.

**In** example 500, the navigation map is an SD map. The SD map is a lane-level SD map. The coordinates 502 of the center lines of the lanes of the SD map can provide three inputs: a lane feature 510, a lane position feature 512, and a reference point 508. They are extracted and encoded from the coordinates of the center line of each lane in the SD map.

The lane feature 510, also known as a lane query, is obtained by encoding the coordinates 502 of the lane's center line using a machine learning model 504 (e.g., a linear projection network). For the lane position feature 512, also referred to as a query position, it uses the coordinates 502 of the center line to determine the relative index of each center line in the spatial dimension, and then converts it into a sine/cosine positional embedding 506. This type of positional embedding is widely used in Transformer networks. At this point, the sine/cosine positional embedding 506 can be used as the lane position feature 512. Additionally, the sine/cosine positional embedding 506 may be further transformed by the network to generate the lane position feature 512. For the reference points 508, they are obtained by sampling the center line using the center line coordinates 502. The reference points 508 provide physical constraints for lane prediction. Finally, the cross-attention module 516 is used to fuse these lane features 510 and lane position features 512 with the BEV features 514. The BEV features 514 are generated from images acquired by cameras. The cross-attention module 516 may further predict the offset 518 of the center line in the high-definition map relative to a reference point. The final lane prediction 522 is obtained by calculating the sum of the reference point 508 and the offset 518, such as performing a summing operation at 520. Additionally, the cross-attention module 516 repeats this a plurality of times during the calculation process.

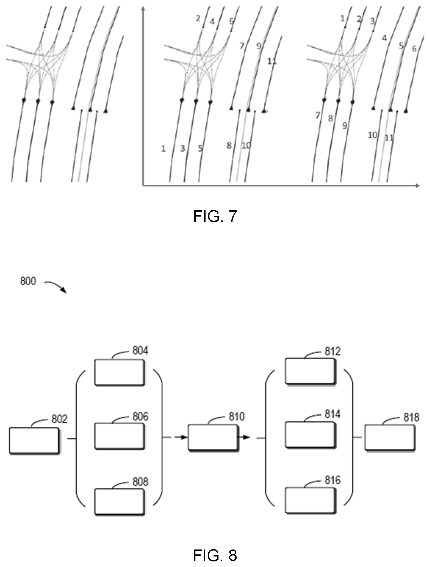

An example of predicting lanes in a high-definition map was described above in conjunction with FIG. 5. Examples of obtaining lane features and lane position features are described below in conjunction with FIGS. 6 and 7, respectively. The process for generating lane features is first described in conjunction with FIG. 6. FIG. 6 illustrates a schematic diagram of an example of generating lane features according to some examples of the present disclosure.

In the example 600 of FIG. 6, during the process of generating lane features 618 from the SD map 602, the geometric and semantic information of the SD map 602 may be encoded into lane features 618. The lane feature 618 may be the lane feature 510 in FIG. 5. The lane center line coordinates 604, lane line type 606, and road marking information 608 may be obtained from the SD map 602 and are also important components of the high-definition map.

The lane center line coordinates 604 are then encoded as point vectors 610, the lane line type 606 is encoded as one-hot vector 612, and the road marking information 608 is encoded as one-hot vector 614. These three vectors are then input into the machine learning model 616 to obtain the lane features 618 of the lane. For each lane in the navigation map, a corresponding lane feature can be acquired.

Next, an example of generating lane position features is described below in conjunction with FIG. 7. FIG. 7 illustrates a schematic diagram of an example of generating positional embeddings according to some examples of the present disclosure.

In the example 700, the center line coordinates 702 of the center line of the lane in the map may be acquired. The query position may then be obtained by sorting the lanes on the SD map. As previously described, the lane features will interact with the BEV features through the cross-attention module. Cross-attention is a basic operation of the Transformer network. The positional embedding of each lane feature is very important for the performance of the Transformer network. When determining the positional embeddings of the lane features, it is necessary to determine the center of the center line of each lane in the SD map. The center is (x, y). All lane center lines may then be converted into x-dimensional and y-dimensional sequence indices, respectively. They are linked into a sequence. Block 704 shows the sorting of these center lines in the X direction using their coordinates. For example, these center lines can be numbered 1-11 in the X direction based on their coordinates. Similarly, block 706 shows the sorting of these center lines in the Y direction using their coordinates. For example, these lines can be numbered 1-11 in the Y direction based on their coordinates. The coordinates of these center lines are then converted to sin/cos positional embeddings 708 to function as positional embeddings for lane features. The sin/cos positional embeddings can be calculated by equations (1) and (2) below: $P {E}_{\left(pos,2i\right)} = sin \left(\frac{pos}{{10000}^{2 i / d} model}\right)$ $P {E}_{\left(pos,2i+1\right)} = cos \left(\frac{pos}{{10000}^{2 i / d} model}\right)$ where d_{model} represents the dimension of the vector, e.g., it may be 256; *pos* represents the position of the lane line in the sequence, and i represents the index of each element in the vector.

FIG. 8 is a schematic diagram of an example of predicting high-definition images according to some examples of the
present disclosure. In example 800, the SD map 802 has three lane features for three lanes, such as lane features 804, 806, and 808. These three lane features are then input into the lane prediction head 810 to obtain predictions for the three lanes 812, 814, and 816 in the high-definition map, thereby completing the high-definition map prediction 818. The lane prediction head 810 may correspond to the cross-attention module 310 in FIG. 3 or the cross-attention module 516 in FIG. 5.

The example 800 shows three lanes, which are merely examples and not specific limitations to the present disclosure. Any suitable number of lanes may be included in the SD map, and a corresponding number of lanes may be included in the generated high-definition map. This is because the SD map will provide information on the number of lanes and the approximate lane center line. Additionally, the lane detection query corresponds to a lane center line in the SD map. Therefore, under the strong constraints of the SD map a priori, the number of lanes will be correct. For each lane feature or query in lane prediction, an a priori instance can be found in the SD map.

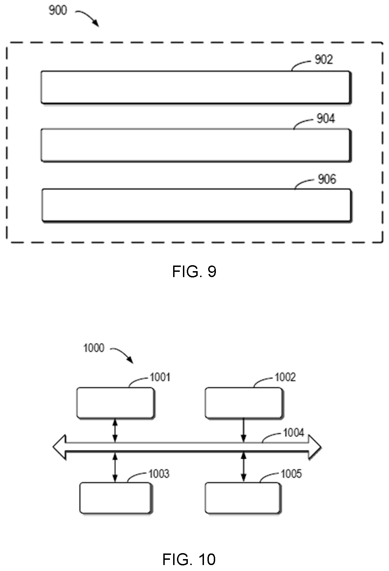

FIG. 9 further illustrates a schematic diagram of an apparatus for generating a map according to examples of the present disclosure. The apparatus 900 may be applied to the controller 104 in FIG. 1, which may comprise a plurality of modules for performing the corresponding steps in the method 200 discussed in FIG. 2. As shown in FIG. 9, the apparatus 900 comprises a view feature determination module 902 configured to determine target view features corresponding to the environment based on a set of images related to the environment surrounding the vehicle; an initialization feature determination module 904 configured to determine initialization features for generating a second map based on map information from a first map of the environment, wherein the accuracy of the first map is lower than that of the second map and/or the first map contains less information than the second map; and a map feature generation module 906 configured to generate map features for the second map based on the target view features and the initialization features.

**In** some examples, the view feature determination module 902 comprises: an image feature determination module configured to determine image features related to a set of images based on a set of images related to the environment; and a first view feature determination module configured to determine target view features for the target view in the environment based on the image features and initial view features for the target view in the environment.

**In** some examples, the target view is a bird's-eye view.

In some examples, the initialization feature determination module 904 comprises: a lane feature generation module configured to generate lane features for reference lanes in a road based on road information in the map information; and an initialization feature generation module configured to generate initialization features based on the lane features.

In some examples, the lane feature generation module comprises: an information determination module configured to determine the geometric and semantic information of a road in the map information; and a feature generation module configured to generate lane features based on the geometric and semantic information.

In some examples, the information determination module comprises: a coordinate determination module configured to determine geometric information including the coordinates of a reference center line of a road, the reference center line being represented by a polyline; and a type and label determination module configured to determine semantic information including the type of the road and the number of reference lanes in the road; and wherein the feature generation module comprises: a first model application module, configured to generate lane features based on the reference center line, the type of road, and the number of reference lanes.

In some examples, the initialization feature generation module comprises: a position quantization representation generation module configured to determine a position quantization representation corresponding to the lane center line based on the coordinates of the lane center line of a reference lane in the road; and a map feature generation module configured to generate initialization features for a second map based on the lane features and position quantization representation.

In some examples, the apparatus 900 further comprises: a reference point position determination module configured to determine the position of a reference point corresponding to the lane center line based on the coordinates of the lane center line; an offset determination module configured to determine the offset of the target center line of the target lane in the second map relative to the reference point based on map features; and a target center line determination module configured to determine the target center line based on the position and offset of the reference point.

In some examples, the reference point position determination module comprises: a sampling module configured to determine a reference point by sampling the lane center line; and a target position determination module configured to determine the position of the reference point.

In some examples, the map feature generation module 906 comprises: a second model application module configured to generate map features by applying target view features and initialization features to a machine learning model.

FIG. 10 illustrates a schematic block diagram of an exemplary device 1000 that may be used to implement the examples of the present disclosure. The controller 104 of FIG. 1 may be implemented using the device 1000. As shown in the figure, the device 1000 comprises a central processing unit (CPU) 1001, which can execute various appropriate actions and processing based on computer program instructions loaded from a read-only memory (ROM) 1002 into a random access memory (RAM) 1003. Additionally, the computing device 1000 further comprises a graphics processing unit (GPU) to run computer program instructions with the CPU. Various programs and data required for the operation of the device 1000 may also be stored in the RAM 1003. The processor 1001, the ROM 1002, and the RAM 1003 are interconnected through a bus 1004. An input/output (I/O) interface 1005 is also connected to the bus 1004.

The various processes and processing described above, such as the method 200, may be executed by the processor 1001. For example, in some examples, the method 200 can be implemented as a computer software program tangibly contained in a machine-readable medium. In some examples, portions or all of the computer program can be loaded and/or installed onto the device 1000 via the ROM 1002. When the computer program is loaded onto the RAM 1003 and executed by the processor 1001, one or more actions of the method 200 described above may be performed.

The present disclosure may be a method, apparatus, system, and/or computer program product. A computer program product may include a computer-readable storage medium having computer-readable program instructions for carrying out various aspects of the present disclosure.

The computer-readable storage medium may be a tangible device that maintains and stores instructions used to instruct execution devices. The computer-readable storage medium may be, for example, but not limited to, an electrical storage device, a magnetic storage device, an optical storage device, an electromagnetic storage device, a semiconductor memory device, or any suitable combination of the above. More specific examples of the computer-readable storage medium (a non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, a mechanical encoding device such as a punch card or raised structures in grooves having instructions stored thereon, and any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network, and/or a wireless network to external computers or external storage devices. The networks may comprise copper transmission cables, optical fiber transmissions, wireless transmissions, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

The computer program instructions for performing operations of the present disclosure can be assembly instructions, instruction set architecture (ISA) instructions, machine instructions, machine-dependent instructions, microcode, firmware instructions, state-setting data, or source code or object code written in any combination of one or more programming languages, wherein the programming languages comprise object-oriented programming languages-such as Smalltalk, C++, etc.-and conventional procedural programming languages-such as the "C" programming language or similar programming languages. Computer-readable program instructions may be fully executed on the user's computer, partially executed on the user's computer, executed as an independent software package, partially executed on the user's computer and partially executed on a remote computer, or fully executed on a remote computer or server. In the case of remote computers, the remote computer can be connected to the user's computer through any type of network-such as a local area network (LAN) or a wide area network (WAN)-or can be connected to an external computer (for example, through the Internet using an Internet Service Provider). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flowcharts and/or block diagrams of methods, devices (systems), and computer program products according to embodiments of the present disclosure. It should be understood that each block of the flowcharts and/or block diagrams, as well as combinations of blocks in the flowcharts and/or block diagrams, can be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices,
an apparatus that realizes the functions/actions stipulated in one or more blocks in the flow charts and/or block diagrams is produced. These computer-readable program instructions may also be stored on a computer-readable storage medium, which can cause a computer, programmable data processing apparatus, and/or other devices to function in a particular manner. Accordingly, a computer-readable medium storing the instructions constitutes an article of manufacture that includes instructions for implementing various aspects of the functions/actions specified in one or more blocks of the flowcharts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flowcharts and block diagrams in the accompanying drawings illustrate possible system architectures, functionalities, and operations for systems, methods, and computer program products according to multiple embodiments of the present disclosure. Regarding this, every block in the flow charts or block diagrams can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in a reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The above description of the various embodiments of the present disclosure is exemplary and not intended to be exhaustive or limited to the disclosed embodiments. Many modifications and variations will be apparent to those of ordinary skill in the art without departing from the scope and spirit of the described embodiments. The selection of terms used in the present description aims to best explain the principles and actual application of the various examples, the technological improvements in the technology in the market, or allow others of ordinary skill in the art to understand the various examples disclosed in the present description.

## Claims

1. . A method (200) for generating a map, comprising:
determining (202) target view features corresponding to the environment based on a set of images related to the environment surrounding the vehicle;
determining (204) initialization features for generating a second map based on map information from a first map of the environment, wherein the accuracy of the first map is lower than that of the second map and/or the first map contains less information than the second map; and
generating (206) map features for the second map based on the target view features and the initialization features.

2. . The method (200) according to Claim 1, wherein determining target view features corresponding to the environment comprises:
determining image features related to the set of images based on the set of images related to the environment; and
determining target view features for the target view in the environment based on the image features and initial view features for the target view in the environment.

3. . The method (200) according to Claim 2, wherein the target view is a bird's-eye view.

4. . The method (200) according to Claim 1, wherein determining initialization features for generating a second map comprises:
generating lane features for reference lanes in the road based on road information of a road in the map information; and
generating initialization features based on the lane features.

5. . The method (200) according to Claim 4, wherein generating lane features for reference lanes in the road comprises:
determining the geometric and semantic information of the road in the map information; and
generating the lane features based on the geometric and semantic information.

6. . The method (200) according to Claim 5, wherein determining the geometric information and semantic information of the road in the map information comprises:
determining the geometric information comprises the coordinates of a reference center line of a road, the reference center line being represented by a polyline; and
determining the semantic information comprises the type of the road and the number of reference lanes in the road; and
generating the lane features based on the geometric information and the semantic information comprises generating the lane features based on the reference center line, the type of the road, and the number of reference lanes.

7. .The method (200) according to Claim 6, wherein generating the initialization features based on the lane features comprises:
determining a position quantization representation corresponding to the lane center line based on the coordinates of the lane center line of a reference lane in the road; and
generating the initialization features based on the lane features and the position quantization representation.

8. . The method (200) according to Claim 7, further comprising:
determining the position of a reference point corresponding to the lane center line based on the coordinates of the lane center line;
determining the offset of the target center line of the target lane in the second map relative to the reference point based on the map features; and
determining the target center line based on the position and offset of the reference point.

9. . The method (200) according to Claim 8, wherein determining the position of a reference point corresponding to the lane center line comprises:
determining the reference point by sampling the lane center line; and
determining the position of the reference point.

10. . The method (200) according to Claim 1, wherein generating map features for the second map based on the target view features and the initialization features comprises:
generating the map features by applying the target view features and the initialization features to a machine learning model.

11. . An apparatus (900) for generating a map, comprising:
a view feature determination module (902) configured to determine target view features corresponding to the environment based on a set of images related to the environment surrounding the vehicle;
an initialization feature determination module (904) configured to determine initialization features for generating a second map based on map information from a first map of the environment, wherein the accuracy of the first map is lower than that of the second map and/or the first map contains less information than the second map; and
a map feature generation module (906) configured to generate map features for the second map based on the target view features and the initialization features.

12. . A controller (1000), comprising:
at least one processor, and
a memory, coupled to the at least one processor, and having instructions stored thereon that, when executed by the at least one processor, cause the controller to perform the method according to any one of Claims 1-10.

13. . A vehicle (102), comprising the controller (according to Claim 12.

14. . A machine program product, comprising machine-executable instructions, wherein the machine-executable instructions are executed by a processor to implement the method according to any one of Claims 1 to 10.

15. . A computer-readable storage medium storing a computer program, which when executed by a processor, implements the method according to any one of Claims 1-10.
